# EUROPÄISCHE PATENTSCHRIFT

(11) **EP 3 044 095 B1**
(45) Veröffentlichungstag und Bekanntmachung des Hinweises auf die Patenterteilung: **30.08.2017**
(21) Anmeldenummer: 14744078.8
(22) Anmeldetag: 24.07.2014
(51) Int. Cl.: B65B 21/00, B65B 35/24, B65B 35/44, B65B 35/58, B65B 65/00, B65G 47/244, B65G 47/31, B65B 17/02, B65B 27/04, B65B 35/54, B65B 51/06, B65B 51/18, B65G 21/20, B65G 47/08

(54) **VERFAHREN UND VORRICHTUNG ZUM HERSTELLEN VON GEBINDEN**
METHOD AND DEVICE FOR PRODUCING BUNDLES
PROCÉDÉ ET DISPOSITIF POUR L'OBTENTION D'UN FAGOT

(30) Priorität: 12.09.2013 DE 102013110012
(43) Veröffentlichungstag der Anmeldung: 20.07.2016
(73) Patentinhaber: KHS GmbH, 44143 Dortmund (DE)
(72) Erfinder: KOPPERS, Jörg, 47589 Uedem (DE)
(86) Internationale Anmeldenummer: PCT/EP2014/065954
(87) Internationale Veröffentlichungsnummer: WO 2015/036157

(56) Entgegenhaltungen:
- EP-A1- 0 875 457
- DE-A1- 10 163 268
- DE-B3-102011 106 759
- DE-B3-102011 119 967
- US-A- 3 194 381

## Beschreibung

Die Erfindung bezieht sich auf ein Verfahren gemäß Oberbegriff Patentanspruch 1 sowie auf eine Vorrichtung gemäß Oberbegriff Patentanspruch 10. Ein gattungsgemäßes Verfahren und eine gattungsgemäße Vorrichtung sind aus DE 10 2011 106 759 B3 bekannt.

Verfahren zum Herstellen von Gebinden, bei denen die Behälter durch Kleberaufträge, die auf die Behälteraußenfläche oder Behältermantelfläche aufgebracht wurde, miteinander zu dem jeweiligen Gebinde verbunden sind, sind bekannt (DE 10 2012 005 925 B3). Hierbei ist es insbesondere auch bekannt, auf zwei Behandlungsstrecken zunächst Behälterteilgruppen mit jeweils drei Behältern zu bilden und durch Zusammenführen von jeweils zwei Behälterteilgruppen ein Gebinde zu formen. Die Behälter sind hierbei auf den Behandlungsstrecken und insbesondere auch auf einem Transportstreckenabschnitt, auf dem das Zusammenführen der Behälterteilgruppen und das Verbinden dieser Behälterteilgruppen zu den Gebinden erfolgt, an ihrer Oberseite bzw. an der dortigen, verschlossenen Behältermündung an Behältergreifern von Transporteuren gehalten.

Aus der DE 101 63 268 A1 ist eine Vorrichtung und ein Verfahren bekannt, bei welchem Gebinde aus quaderförmigen Behältern erstellt werden, wobei die Behälter, wie bspw. Getränkekartons, unter permanentem Staudruck in einem ersten Bewegungsabschnitt linienartig ausgerichtet werden und in einem zweiten Bewegungsabschnitt in Förderrichtung zueinander abgewinkelt und in den zwischen zwei benachbarten Behältern entstehenden Spalt ein Klebstoff auf mindestens eine der einander zugewandten Stirnflächen der benachbarten Produkte gespritzt wird. In einem dritten Bewegunsabschnitt werden dann die Produkte linienartig, einreihig aneinandergepreßt werden.

Weiterhin ist aus der US 4 078 357 A ebenfalls eine Vorrichtung und ein Verfahren bekannt, bei welchem zu gruppierende Behälter in zwei Reihen nebeneinander angeordnet und gehalten werden, wobei anschließend ein mit Klebstoff beschichteter biegsamer Ring vertikal in den Raum zwischen jede Gruppe von vier Behältern eingefügt wird. Anschließend werden die Behälter in der gruppierten Formation eine Strecke transportiert und dabei aneinander gepresst.

Aufgabe der Erfindung ist es, dieses bekannte Verfahren hinsichtlich der Bildung der Behältergruppen und der Verdichtung der Behälter zu den Behälterteilgruppen sowie hinsichtlich der Verdichtung der Behälterteilgruppen zu dem jeweiligen Gebinde zu verbessern. Zur Lösung dieser Aufgabe ist ein Verfahren entsprechend dem Patentanspruch 1 ausgebildet. Eine Vorrichtung ist Gegenstand des Patentanspruchs 10.

Als Kleber eignet sich bei der Erfindung vorzugsweise ein Kleber, der selbstklebend und durch Anpressen eine Klebeverbindung herstellt und auch als Selbstkleber bezeichnet wird, oder ein Kleber mit kurzer Abbindezeit, beispielsweise ein Heiß- oder Schmelzkleber.

"Verdichten eines Behälterstroms" oder "Verdichten von Behältergruppen" bedeutet im Sinne der Erfindung, dass die Behälter so zusammengeführt oder zusammengedrückt werden, dass sie nach dem Verdichten mit ihren Mantelflächen gegeneinander anliegen.

"Behälter" sind im Sinne der Erfindung insbesondere Dosen oder Flaschen, jeweils aus Metall, Glas und/oder Kunststoff, aber auch andere Packmittel, insbesondere auch solche die zum Abfüllen von pulverförmigen, granulatartigen, flüssigen oder viskosen Produkten geeignet sind.

Der Ausdruck "im Wesentlichen" bzw. "etwa" bzw. "ca." bedeutet im Sinne der Erfindung Abweichungen vom jeweils exakten Wert um +/- 10%, bevorzugt um +/-5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an Ausführungsbeispielen näher erläutert. Es zeigen:

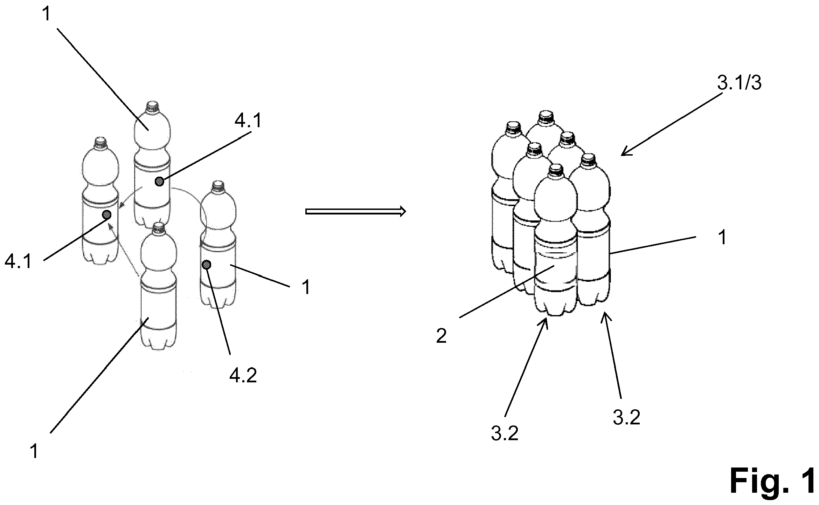

- Fig. 1: in schematischer perspektivischer Darstellung die Herstellung eines Gebindes aus mehreren Behältern durch Bildung von Behältergruppen aus jeweils mehreren Behältern und durch unmittelbares Verbinden der Behälter jeder Behältergruppe über Kleberaufträge eines Kontaktklebers;
- Fig. 2: in schematischer Darstellung und in Draufsicht eine Vorrichtung zum Herstellen von Gebinden;
- Fig. 3: die Vorrichtung der Fig. 2 in Seitenansicht;
- Fig. 4: in Seitenansicht drei in der Transportrichtung A der Behälter aneinander anschließende Riemengruppen der Vorrichtung der Fig. 2;
- Fig. 5: in einer Schnittdarstellung der Vorrichtung der Fig. 2 im Bereich der Beleimungsstationen oder im Bereich der Kleberauftragsköpfe;
- Fig. 6: in schematischer Darstellung und Draufsicht in Transportrichtung der Behälter an einander anschließende Riemenanordnungen der Vorrichtung der Fig. 2;

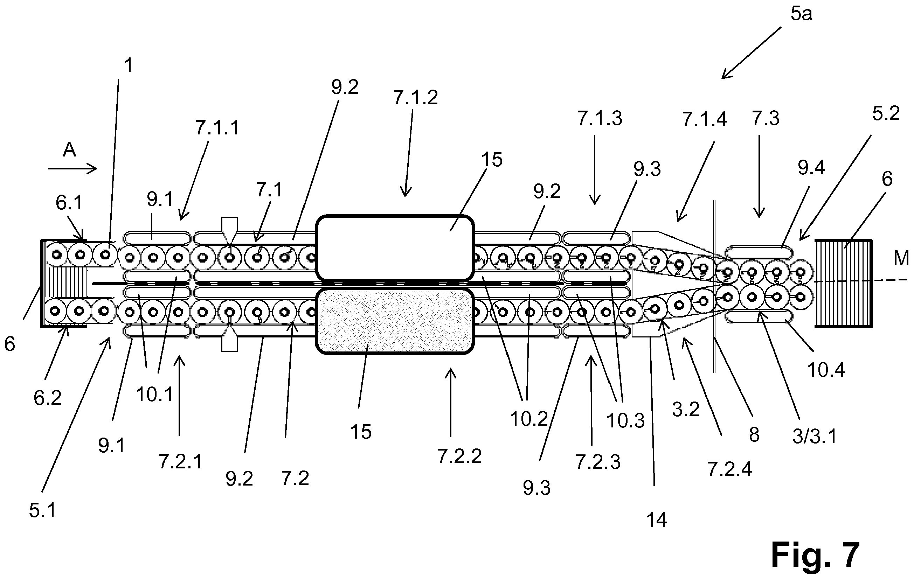

- Fig. 7: in schematischer Darstellung und in Draufsicht eine Vorrichtung zum Herstellen von Gebinden bei einer weiteren Ausführungsform der Erfindung;
- Fig. 8: in vereinfachter perspektivischer Darstellung eine Beleimungsstation oder Kleberauftragsstation der Vorrichtung der Fig. 8.

In den Figuren sind 1 Behälter, beispielsweise Flaschen und dabei speziell Flaschen aus Kunststoff, z.B. aus PET (Polyethylenterephthalat), die durch Blasformen hergestellt sind. Die Behälter 1 sind mit einem flüssigen Füllgut gefüllt, verschlossen und mit einer Behälterausstattung, z.B. mit Etiketten 2 versehen. Mehrere, d.h. bei der dargestellten Ausführungsform insgesamt sechs Behälter 1 bilden eine Behältergruppe 3.1, in der die Behälter 1 bei der dargestellten Ausführungsform in zwei Behälterteilgruppen 3.2 oder Reihen mit jeweils drei Behältern 1 zusammengestellt und gegeneinander anliegend über Kleberaufträge 4.1 und 4.2 eines geeigneten Klebers unmittelbar, d.h. ohne eine Umhüllung zu dem jeweiligen Gebinde 3 verbunden sind. Die Kleberaufträge 4.1 und 4.2 sind auf die in der verdichteten Behältergruppe 3.1 sich berührenden Bereiche der Mantelflächen der Behälter aufgebracht. Im Detail dienen die Kleberaufträge 4.1 zum Verbinden der Behälter 1 in den beiden Reihen oder Behälterteilgruppen 3.2 und die Kleberaufträge 4.2 zum Verbinden der Behälter 1 quer zu diesen Reihen, d.h. zum Verbinden der Behälterteilgruppen 3.2.

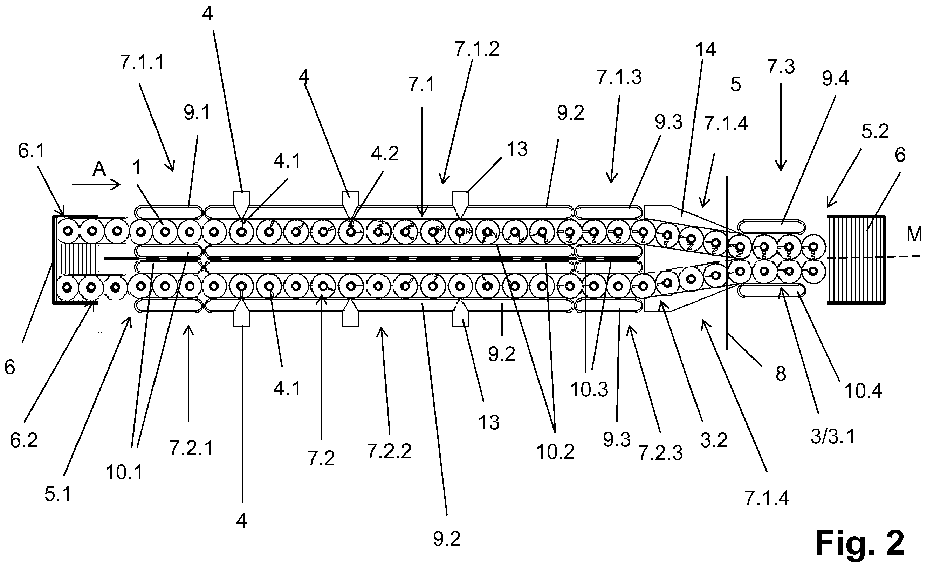

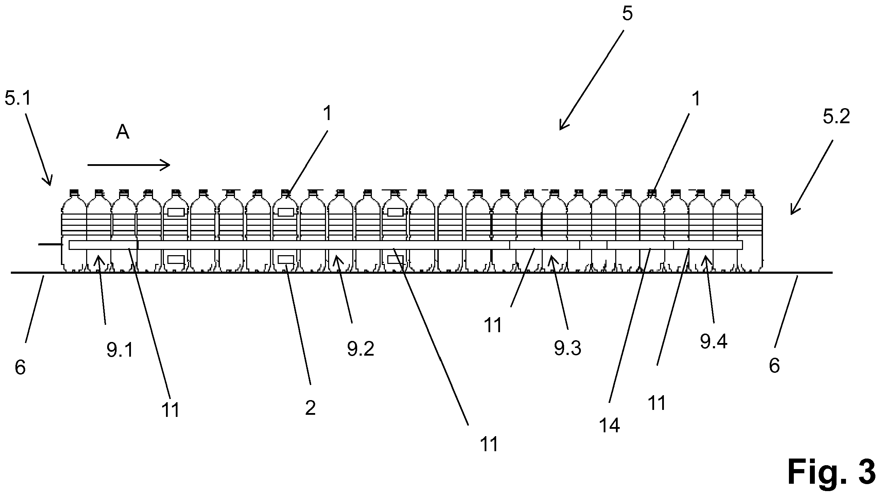

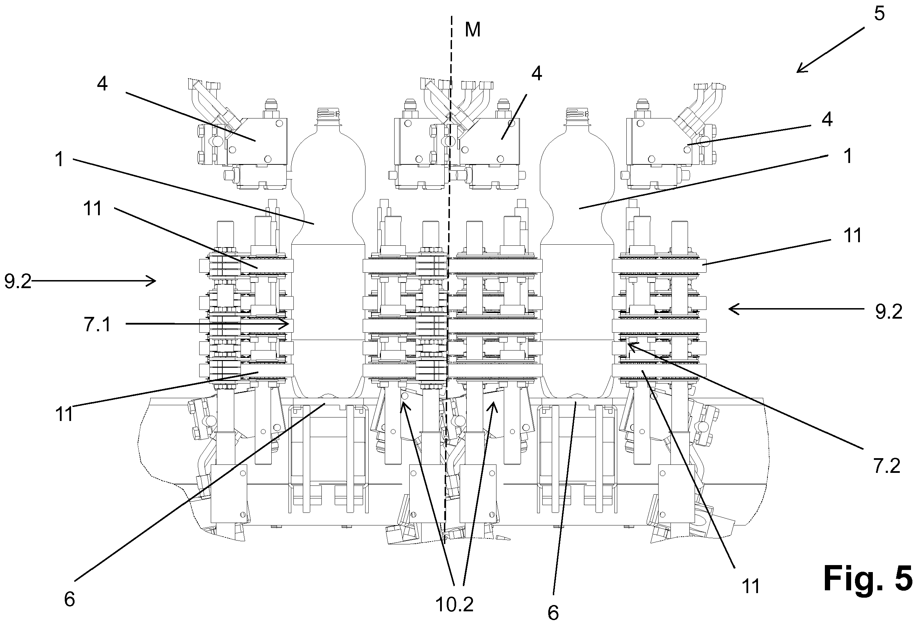

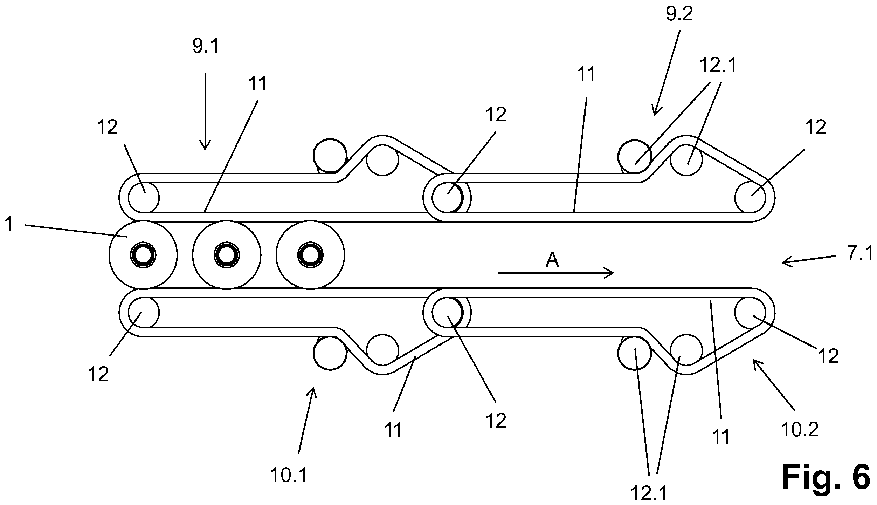

Zum Herstellen der Gebinde 3 aus den Behältern 1 dient die in den Fig. 2 - 6 dargestellte und allgemein mit 5 bezeichnete Vorrichtung, deren Behältereinlauf 5.1 die Behälter 1 aufrechtstehend, d.h. mit ihren Behälterachsen vertikal orientiert als mehrspuriger Behälterstrom, d.h. bei der dargestellten Ausführungsform in zwei Spuren 6.1 und 6.2 mit einem Transporteur 6 zugeführt werden. Der Transporteur 6 weist beispielsweise mehrere endlos umlaufende Transportbänder in Form von Scharnierbandketten auf, die zumindest senkrecht zur Transportrichtung A aneinander anschließen und eine horizontale oder im wesentlichen horizontale Transportebene bilden, auf der die Behälter 1 mit ihrem Behälterboden aufstehen. Die Gebinde 3 werden über ein Transportelement an einem Auslauf 5.2 aus der Vorrichtung 5 abtransportiert. Bei der dargestellten Ausführungsform bilden der Transporteur 6 oder dessen Transportbänder zugleich auch das sich an den Behälterauslauf 5.2 anschließende Transportelement zum Weitertransport der Gebinde 3.

Die Behälter 1 des einspurigen Behälterstroms der Spur 6.1 gelangen an eine Behandlungsstrecke 7.1 der Vorrichtung 5 und werden als einspuriger Behälterstrom durch diese Behandlungsstrecke bewegt. Die Behälter 1 des einspurigen Behälterstroms der Spur 6.2 gelangen an eine Behandlungsstrecke 7.2 der Vorrichtung 5 und werden als einspuriger Behälterstrom durch diese Behandlungsstrecke bewegt. Die beiden Behandlungsstrecken 7.1 und 7.2 sind jeweils lineare oder geradlinige Transportstrecken, auf denen die Behälter 1 in Transportrichtung A weiterbewegt werden und auf denen in der nachstehend noch näher beschriebenen Weise die Behälterteilgruppen 3.2 gebildet werden. Die Behandlungsstrecken 7.1 und 7.2 sind weiterhin spiegelsymmetrisch zu einer zwischen diesen Behandlungsstrecken verlaufenden und die Transportrichtung A einschließenden vertikalen Symmetrie- oder Mittelebene M ausgebildet.

Zur Erzielung eines gewünschten optischen Erscheinungsbildes der Gebinde 3 in der Weise, dass die auf den Behältern 1 vorgesehenen Ausstattungen oder Etiketten 2 eine vorgegebene Orientierung innerhalb des Gebindes 3 aufweisen, wird bei der Vorrichtung 5 davon ausgegangen, dass die Behälter 1 jeweils dem Behältereinlauf 5.1 in einer vorgegebenen Orientierung bezogen auf ihre Ausstattungen oder Etiketten 2 zugeführt werden. Um weiterhin eindeutige und reproduzierbare Verhältnisse bei der Behandlung der Behälter 1, d.h. beim Aufbringen der Kleberaufträge 4.1 und 4.2 zu erreichen, bilden die Behandlungsstrecken 7.1 und 7.2 an den Behältereinlauf 5.1 unmittelbar anschließend einen ersten Abschnitt 7.1.1 bzw. 7.2.1, an dessen Einlauf der jeweilige Behälterstrom verdichtet wird, so dass die Behälter 1 dann in Transportrichtung A dicht aneinander anschließen. An den Abschnitt 7.1.1 bzw. 7.2.1 schließt sich ein weiterer Abschnitt 7.1.2 bzw. 7.2.2 an, der so ausgeführt ist, dass am Übergang zwischen dem Abschnitt 7.1.1 und dem Abschnitt 7.1.2 bzw. am Übergang zwischen dem Abschnitt 7.2.1 und dem Abschnitt 7.2.2 zunächst jeweils eine Lücke zwischen den in Transportrichtung A aufeinander folgenden Behältern 1 erzeugt wird und dann eventuell unter gesteuertem Drehen jedes Behälters 1 um seine vertikale Behälterachse ein erster Kleberauftrag 4.1 und anschließend nach einem Drehen des jeweiligen Behälters 1 um 90° um seine Behälterachse der zweite Kleberauftrag 4.2 aufgebracht werden, so dass dieser um die Behälterachse um 90° gegenüber dem ersten Kleberauftrag 4.1 versetzt ist.

Bei der dargestellten Ausführungsform erfolgt das Aufbringen der zweiten Kleberaufträge 4.2 nur an der Behandlungsstrecke 7.1, d.h. nur die diese Behandlungsstrecke passierenden Behälter 1 weisen die beiden Kleberaufträge 4.1 und 4.2 auf, während auf die Behandlungsstecke 7.2 passierende Behälter 1 lediglich der Kleberauftrag 4.1 aufgebracht wird. Das Aufbringen der Kleberaufträge 4.1 und 4.2 erfolgt jeweils an Köpfen bzw. an Kleberauftragsköpfen 4, beispielsweise über an diesen Köpfen vorgesehene Düsen. Das Aufbringen der Kleberaufträge 4.1 ist so gesteuert, dass jeweils ein einer jeden Behälterteilgruppe 3.2 zugeordneter Behälter 1, d.h. bei der dargestellten Ausführungsform jeder bezogen auf die Transportrichtung A dritte Behälter 1 jeder Behälterteilgruppe 3.2 den Kleberauftrag 4.1 nicht aufweist.

Nach dem Aufbringen der Kleberaufträge 4.1 und 4.2 werden die voneinander beabstandeten Behälter 1 auf jedem Abschnitt 7.1.2 bzw. 7.2.2 um ihre Behälterachse so gedreht, dass am Ende des betreffenden Abschnittes sich die Kleberaufträge 4.1 in der Achse der Transportrichtung A und bezogen auf diese Transportrichtung A auf dem nacheilenden Umfangsbereich des jeweiligen Behälters befinden, während die Kleberaufträge 4.2 an dem der Mittelebene M zugewandten Umfangsbereich der Behälter 1 vorgesehen sind. An den Abschnitt 7.1.2 schließt sich ein Abschnitt 7.1.3 an, an dessen Einlauf ein erneutes Verdichten des Behälterstroms erfolgt und an dem bei dicht gegeneinander anliegenden Behältern 1 ein Abbinden der Kleberaufträge 4.1 und damit ein Verbinden der Behälter 1 über die Kleberaufträge 4.1 zu den Behälterteilgruppen 3.2 erfolgt.

An den Abschnitt 7.1.3 und 7.2.3 schließen sich Abschnitte 7.1.4 und 7.2.4 an, auf denen die Behälterteilgruppen 3.2, die bei der dargestellten Ausführungsform jeweils drei über die Kleberaufträge 4.1 miteinander verbundene Behälter 1 aufweisen und bei denen die Behälter der Behälterteilgruppen 3.2 der Behandlungsstrecke 7.1 auch die Kleberaufträge 4.2 aufweisen, zusammengeführt werden, und zwar zur Bildung der Gebinde 3 mit den über die Kleberaufträge 4.1 und 4.2 miteinander verbundenen Behältern 1.

An die Abschnitte 7.1.4 und 7.2.4 schließt sich ein gemeinsamer Abschnitt 7.3 an, auf dem die Behälter 1 der jeweils ein Gebinde 3 bildenden Behälterteilgruppen 3.2 senkrecht zur Transportrichtung A gegeneinander angedrückt werden und ein Abbinden der Kleberaufträge 4.2 erfolgt. Zwischen den Abschnitten 7.1.4 und 7.2.4 und dem gemeinsamen Abschnitt 7.3 ist bevorzugt eine Einrichtung 8 vorgesehen, die sicherstellt, dass die beiden jeweils ein Gebinde 3 bildenden Behälterteilgruppen 3.2 synchron und mit derselben Transportgeschwindigkeit in dem Abschnitt 7.3 zusammengeführt werden. Die Einrichtung 8 ist beispielsweise von einem Rückhalteelement gebildet, welches z.B. stabförmig senkrecht zur Transportrichtung A stationär angeordnet ist oder mit den Behälterteilgruppen 3.2 mitbewegt wird und sensorgesteuert ist. Bevorzugt ist die Einrichtung 8 schleusenartig mit mehreren Rückhalteelementen ausgebildet.

An den Abschnitten 7.1.1 und 7.2.1 sind erste seitliche Riemenanordnungen 9.1 und 10.1 so vorgesehen, dass an jedem Abschnitt 7.1.1 und 7.2.1 eine Riemenanordnung 9.1 einer Riemenanordnung 10.1 in einer Achsrichtung senkrecht zur Transportrichtung A gegenüberliegt und die beiden Riemenanordnungen 9.1 und 10.1 spiegelsymmetrisch zu einer die Transportrichtung A sowie die Achsen der Behälter 1 einschließenden Symmetrieebene ausgebildet sind.

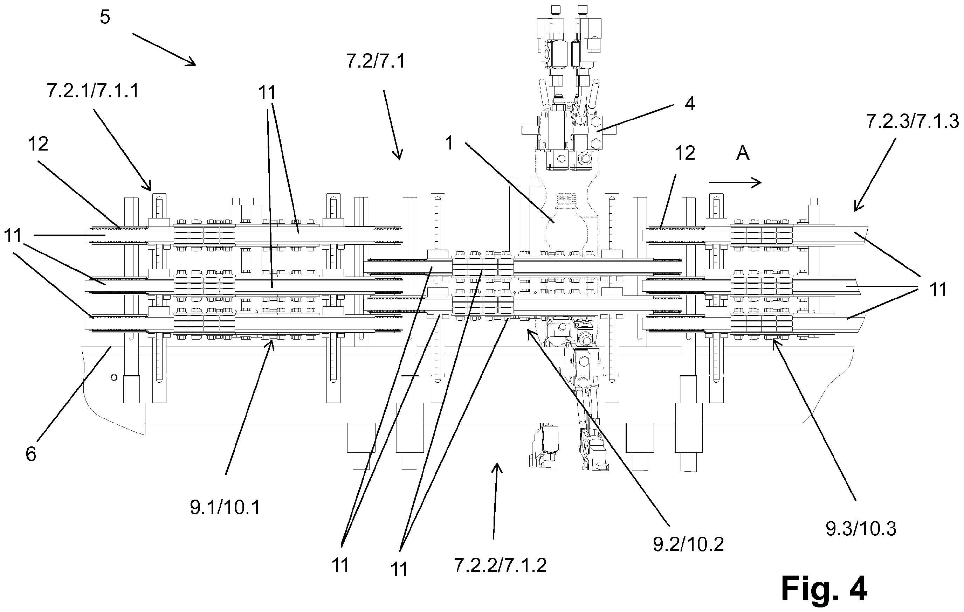

Wie insbesondere in der Fig. 4 dargestellt, besteht jede Riemenanordnung 9.1 und 10.1 aus mehreren jeweils eine in sich geschlossene horizontale oder im Wesentlichen horizontale Schlaufe bildenden Riemen 11, die jeweils über zwei um eine vertikale Achse drehbare Riemenräder 12 und über Spannräder 12.1 geführt sind. Jede von einem Riemen 11 gebildete Schlaufe ist dabei so angeordnet, dass jeder Riemen 11 an der inneren, sich in Transportrichtung A erstreckenden Länge seiner Schlaufe gegen die Umfangs- oder Mantelfläche der Behälter 1 mit einer gewissen Kraft angepresst anliegt.

Die Riemenanordnungen 9.1 und 10.1, die seitlich der Behandlungsstrecke oder Bewegungsbahn der Behälter 1 angeordnet sind, weisen jeweils drei Riemen 11 auf, die drei in vertikaler Richtung gegeneinander versetzte und voneinander beabstandete Schlaufen bilden. Die Riemenräder 12 an einer gemeinsamen Welle, bevorzugt die in Transportrichtung A am Ende des Abschnitts 7.1.1 bzw. 7.2.1 vorgesehenen Riemenräder 12 sind durch einen nicht dargestellten Antrieb angetrieben, und zwar derart, dass die gegen die Behälter 1 anliegenden Schlaufenlängen beider Riemenanordnungen 9.1 und 10.1 in Transportrichtung A umlaufen, allerdings mit einer gegenüber dem Transporteur 6 reduzierten Transportgeschwindigkeit, so dass die Behälter 1 am Einlauf des Abschnittes 7.1.1 bzw. 7.2.1 gegeneinander auflaufen und dadurch den verdichteten Behälterstrom bilden.

An den Abschnitten 7.1.2 und 7.2.2 sind wiederum seitlich der Behandlungsstrecke oder Bewegungsbahn der Behälter 1 zwei Riemenanordnungen 9.2 und 10.2 vorgesehen, die analog zu den Riemenanordnungen 9.1 und 10.1 ausgebildet sind, bei der dargestellten Ausführungsform aber jeweils nur zwei eine geschlossene horizontale oder im Wesentlichen horizontale Schlaufe formende Riemen 11 aufweisen. Die Riemen 11 der Riemenanordnungen 9.2 und 10.2, die sich wiederum an der Behandlungsstrecke am Abschnitt 7.1.2 bzw. 7.2.2 gegenüberliegen und jeweils eine horizontale oder im Wesentlichen horizontale Schlaufe bilden, sind gegenläufig so angetrieben, dass sich die gegen die Behälter 1 anliegenden Schlaufenlängen in Transportrichtung A bewegen, aber mit einer im Vergleich zu den Riemen der Riemenanordnungen 9.1 und 10.1 höheren Geschwindigkeit, beispielsweise mit einer der Transportgeschwindigkeit des Transporteurs 6 entsprechenden Geschwindigkeit. Die Geschwindigkeit der Riemen 11 der Riemenanordnungen 9.2 ist dabei aber unterschiedlich von der Geschwindigkeit der Riemen 11 der Riemenanordnung 10.2, so dass am Übergang zwischen dem Abschnitt 7.1.1 und dem Abschnitt 7.1.2 bzw. zwischen dem Abschnitt 7.2.1 und dem Abschnitt 7.2.2 nicht nur eine Beabstandung der Behälter 1 erfolgt, d.h. Lücken zwischen den Behältern 1 erzeugt werden, sondern die Behälter 1 auch um ihre vertikale Behälterachse gedreht werden.

Die Steuerung der Riemen der Riemenanordnungen 9.2 und 10.2 erfolgt z.B. überwacht durch wenigstens eine Sensoreinrichtung 13 derart, dass am Übergang zu dem Abschnitt 7.1.3 bzw. 7.2.3 die Kleberaufträge 4.1 und 4.2 die erforderliche Orientierung aufweist.

An den Abschnitten 7.1.3 und 7.2.3 sind wiederum beidseitig von der Behandlungsstrecke Riemenanordnungen 9.3 und 10.3 vorgesehen, die analog zu den Riemenanordnungen 9.1 und 10.1 ausgebildet sind und drei jeweils eine geschlossene Schlaufe bildende und gegen die Behälter 1 anliegende Riemen 11 aufweise, deren Schlaufen wiederum in vertikaler Richtung gegeneinander versetzt und voneinander beabstandet sind. Die Riemen 11 der Riemenanordnungen 9.3 und 10.3 sind so angetrieben, dass sich die gegen die Behälter 1 anliegenden Schlaufenlängen beider Riemenanordnungen 9.1 und 10.1 in Transportrichtung A bewegen, allerdings mit einer Geschwindigkeit, die kleiner ist als die Transportgeschwindigkeit des Abschnittes 7.1.2 bzw. 7.2.2. Hierdurch erfolgt am Übergang zum Abschnitt 7.1.3 bzw. 7.2.3 das Verdichten des Behälterstroms, so dass die Behälter 1 der jeweiligen Behälterteilgruppe 3.2 an den Kleberaufträgen 4.1 an einander anliegen. Auf den Abschnitten 7.1.3 und 7.2.3 erfolgt dann vorzugsweise auch ein zumindest teilweises Abbinden oder Aushärten der Kleberaufträge 4.1.

Auf dem Abschnitt 7.1.4 und 7.2.4 werden die weiterhin auf dem Transporteur 6 aufstehenden Behälter für das Zusammenführen der Behälterteilgruppen 3.2 durch Führungsstücke 14 umgelenkt.

Der Abschnitt 7.3 weist zwei seitliche Riemenanordnungen 9.3 und 10.3 auf, die analog zu den Riemenanordnungen 9.1 und 10.1 ausgebildet mehrere, jeweils eine geschlossene Schlaufe bildende Riemen 11 aufweisen, wobei die horizontalen Schlaufen in vertikaler Richtung wiederum gegeneinander versetzt und voneinander beabstandet und so mit gleicher Geschwindigkeit aber gegenläufig angetrieben sind, dass sich die gegen die Behälter 1 angedrückt anliegenden Schlaufenlängen in Transportrichtung A bewegen und über die Riemenanordnungen 9.3 und 10.3 die Behälter 1 jeweils zweier Behälterteilgruppen 3.2 zum Verbinden über die Kleberaufträge 4.2 senkrecht zur Transportrichtung A gegeneinander angepresst werden.

Wie insbesondere aus der Fig. 4 ersichtlich, sind die Übergänge zwischen den Riemenanordnungen 9.1 - 9.3 sowie auch zwischen den Riemenanordnungen 10.1 - 10.3 so ausgebildet, dass sich an jedem Übergang die von den Riemen 11 gebildeten Schlaufen überlappen bzw. die von den Riemen 11 der Riemenanordnungen 9.2 bzw. 10.2 gebildeten Schlaufen in die Zwischenräume hineinreichen zwischen den Schlaufen der Riemen 11 der Riemenanordnungen 9.1 und 9.3 bzw. 10.1 und 10.3 gebildet sind, so dass die Behälter 1 entlang der Behandlungsstrecken 7.1 und 7.2 kontinuierlich mit den Riemen 11 der Riemenanordnungen in Eingriff stehen.

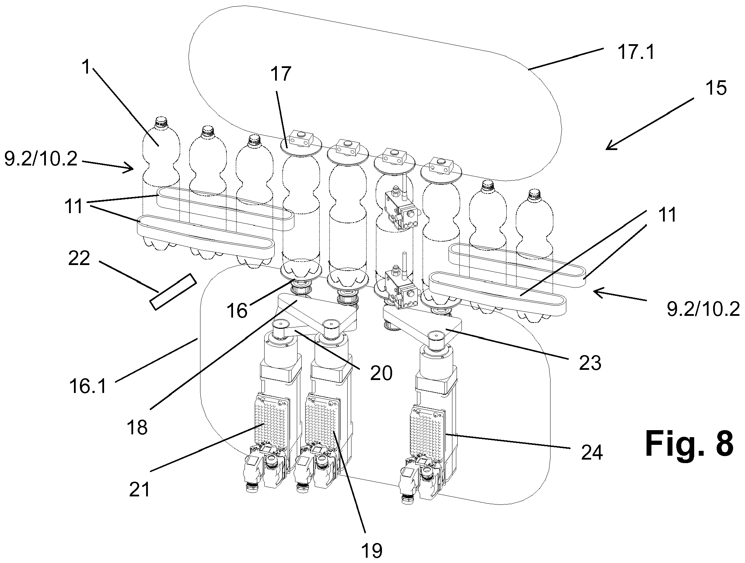

Die Fig. 8 zeigt als weitere Ausführungsform eine Vorrichtung 5a, die sich von der Vorrichtung 5 dadurch unterscheidet, dass innerhalb des Abschnittes 7.1.2 und 7.2.2 jeweils eine Kleberauftragsstation 15 vorgesehen ist, auf der das Ausrichten der Behälter 1 in Bezug auf ihre Ausstattung oder Etiketten 2, das Aufbringen der Kleberaufträge 4.1 und 4.2 unter gesteuertem Drehen der Behälter 1 um ihre Behälterachse sowie das Ausrichten der Kleberaufträge in Bezug auf die Transportrichtung A erfolgen.

Auch bei dieser Ausführungsform weist der Abschnitt 7.1.2 sowie 7.2.2 am Einlauf und Auslauf jeweils die beiden Riemenanordnungen 9.2 und 10.2 auf, deren Riemen 11 so angetrieben werden, dass die Behälter 1 am Übergang zwischen dem Abschnitt 7.1.1 und 7.1.2 und am Übergang zwischen dem Abschnitt 7.2.1 und 7.2.2 voneinander beabstandet werden. In Transportrichtung A gelangen die Behälter 1 an die Kleberauftragsstation 15. Dort wird jeder Behälter 1 an einen Behälterträger oder Behälterteller 16 übergeben, auf dem der Behälter 1 mit seinem Boden aufsteht, und zwar derart, dass er mit dem Behälterteller 16 drehfest verbunden ist. Weiterhin wird auf jeden Behälter oben ein Drehteller 17 aufgesetzt, der den Behälter 1 u.a. gegen Umfallen sichert und gegen den Behälterteller 16 angedrückt. Die Behälterteller 16 werden beispielsweise mit einem nicht dargestellten Funktionselement auf einer geschlossenen Bewegungsbahn 16.1 bewegt. In gleicher Weise werden die Drehteller 17 auf einer geschlossenen Bewegungsbahn 17.1 bewegt, und zwar derart, dass sich die auf den Behältertellern 16 aufstehenden Behälter 1 in Transportrichtung A mit der Transportgeschwindigkeit des Abschnittes 7.1.1 und 7.2.1 bewegen. Hierbei kommen die Behälterteller 16 zunächst mit einem Riemen 18 eines ersten Servoantriebs 19 und anschließend mit einem unterhalb des Riemens 18 angeordneten Riemen 20 eines zweiten Servoantriebs 21 in Eingriff, so dass jeder Behälter 1 gesteuert durch ein Sensorsignal eines optoelektrischen Sensors 22 um seine Behälterachse so gedreht werden kann, dass die Ausstattung oder das Etikett 2 in Bezug auf die Transportrichtung A eine geforderte Orientierung aufweist. Anschließend erfolgt über die Köpfe 4 das Aufbringen beispielsweise der Kleberaufträge 4.1 und nach einem Drehen des jeweiligen Behälters 1 um 90° um seine Behälterachse mittels des Riemens 23 und des Servomotors 24 über einen weiteren Kopf 4 das Aufbringen der Kleberaufträge 4.2 an die Behandlungsstrecke 7.1. Mit den Riemen 11 der anschließenden Riemenanordnungen 9.2 und 10.2 werden die Behälter 1 dann in die erforderliche Orientierung gedreht. Letzteres kann grundsätzlich auch durch einen weiteren Riemen eines weiteren Servoantriebs erfolgen.

Die Riemen 18, 20 und 23 der Servoantriebe sind jeweils an der Außenseite ihrer Schlaufen mit einer Verzahnung versehen, in die ein Zahnrad oder eine Verzahnung an dem jeweiligen Behälterteller 16 eingreift.

Durch die Verwendung von jeweils mehreren Riemen 11 bei den Riemenanordnungen 9.1 - 9.4 und 10.1 - 10.4 ist gewährleistet, dass die Behälter 1 insbesondere auch bei der Übergabe zwischen den Abschnitten der Behandlungsstrecke 7.1 und 7.2 nicht verkippen, also die vertikale Orientierung der Behälterachsen aufrechterhalten wird. Weiterhin wird durch das Drehen der Behälter 1 um ihre Behälterachsen auf dem Abschnitt 7.1.2 und 7.2.2 auch erreicht, dass dann, wenn die Behälterachse eines Behälters 1 gegenüber der Vertikalen geneigt sein sollte, die angestrebte vertikale Orientierung der Behälterachse wieder hergestellt wird.

Der Transport der Behälter 1 durch die Behandlungsstrecken 7.1 und 7.2 wird durch die Riemenanordnungen 9.1 - 9.3 und 10.1 - 10.3 bewirkt. Die Riemen 11 besitzen hierfür eine ausrechende Breite und Dicke, beispielsweise eine Dicke von mindestens 4mm und sind vorzugsweise zumindest an ihrer gegen die Behälter 1 anliegenden Seite mit einer griffigen Beschichtung versehen. Weiterhin ist der Abstand, den die gegen die Behälter anliegenden Schlaufenlängen der einander zugeordneten Riemenanordnungen 9.1 und 10.1, 9.2 und 10.2 sowie 9.3 und 10.3 von einander aufweisen kleiner als der Durchmesser der Behälter 1 und beträgt beispielsweise 95% bis 97% des Behälterdurchmessers. Jede von einem Riemen 11 gebildete Schlaufe einer Riemenanordnung 9.1 - 9.3 liegt bevorzugt in einer gemeinsamen Ebene mit einer Schlaufe, die von einem Riemen 11 der zugeordneten Riemenanordnung gebildet ist.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrundeliegende Erfindungsgedanke gemäß den unabhängigen Ansprüchen verlassen wird. In den Figuren wurden die Kleberaufträge 4.1 und 4.2 jeweils als einzelne Kleberpunkte dargestellt. Es versteht sich, dass die Kleberaufträge 4.1 und 4.2 auch eine andere Form aufweisen können und/oder dass jeder Kleberauftrag 4.1 und/oder 4.2 auch jeweils aus mehreren punkt- oder streifenförmigen Aufträgen bestehen kann.

### Bezugszeichenliste

- 1: Behälter
- 2: Etikett
- 3: Gebinde
- 3.1: Behältergruppe
- 3.2: Behälterteilgruppe
- 4: Auftragskopf
- 4.1, 4.2: Kleberauftrag
- 5, 5a: Vorrichtung
- 6: Transporteur
- 6.1, 6.2: Behälterstrom
- 7.1, 7.2: Behandlungsstrecke
- 7.1.1 - 7.1.4: Abschnitt
- 7.2.1 - 7.2.4: Abschnitt
- 7.3: Abschnitt
- 8: Rückhalteelement
- 9.1 - 9.4: Riemenanordnung
- 10.1 - 10.4: Riemenanordnung
- 11: Riemen
- 12: Riemenrad
- 12.1: Spannrad
- 13: optoelektrischer Sensor, beispielsweise Kamera
- 14: Führungsstück
- 15: Kleberauftragsstation
- 16: Behälterteller
- 17: Stütz- oder Drehteller
- 16.1, 17.1: Bewegungsbahn
- 18: Riemen
- 19: Servoantrieb
- 20: Riemen
- 21: Servoantrieb
- 22: Optoelektrischer Sensor, Kamera
- 23: Riemen
- 24: Servoantrieb
- A: Transportrichtung
- M: Symmetrie- oder Mittelebene

## Patentansprüche

1. Verfahren zum Herstellen von Gebinden (3), die in wenigstens zwei Behälterteilgruppen (3.2) jeweils zumindest zwei Behälter (1) aufweisen, wobei die Behälter (1) über einen Transporteur (6) einem Behältereinlauf (5.1) einer Vorrichtung (5) mit Behandlungsstrecken (7.1, 7.2) in wenigstens einem zweispurigen Behälterstrom (6.1, 6.2) zugeführt werden, wobei die Behälter (1) auf den Behandlungsstrecken (7.1, 7.2) der Vorrichtung mit Kleberaufträgen (4.1, 4.2) eines Klebers versehen werden, wobei auf jeder Behandlungsstrecke (7.1, 7.2) aus den so behandelten Behältern (1) zunächst die Behälterteilgruppen (3.2) mit ersten Kleberaufträgen (4.1) zwischen den Behältern (1) gebildet werden, und wobei durch Zusammenführen der Behälterteilgruppen (3.2) diese über zweite Kleberaufträge (4.2) miteinander verbunden werden,
**dadurch gekennzeichnet,**
**dass** auf wenigstens einem ersten Abschnitt (7.1.2, 7.2.2) jeder Behandlungsstrecke (7.1, 7.2) über beidseitig der Bewegungsbahn der Behälter (1) angeordnete erste Riemenanordnungen (9.2, 10.2), die endlos umlaufend angetriebene und jeweils eine Schlaufe bildende sowie mit einer Schlaufenlänge gegen die Behälter (1) anliegende Riemen (11) aufweisen, Lücken zwischen den in Transportrichtung (A) aufeinanderfolgenden Behältern (1) erzeugt, anschließend der erste Kleberauftrag (4.1) auf jeden Behälter sowie an wenigstens einer Behandlungsstrecke auch der zweite Kleberauftrag (4.1) auf die Behälter (1) aufgebracht wird, und dass auf einem in Transportrichtung (A) anschließenden zweiten Abschnitt (7.1.3, 7.2.3) das Verdichten der Behälter (1) in Transportrichtung (A) durch zweite Riemenanordnungen (9.3, 10.3) erfolgt, die beidseitig der Bewegungsbahn der Behälter (1) angeordnet sind und die endlos umlaufend angetriebene und jeweils eine Schlaufe bildende sowie mit einer Schlaufenlänge gegen die Behälter (1) anliegende Riemen (11) aufweisen, die mit einer gegenüber der Transportgeschwindigkeit des ersten Abschnitts (7.1.2, 7.2.2) reduzierten Geschwindigkeit angetrieben werden.

2. Verfahren nach Anspruch 1, **dadurch gekennzeichnet, dass** die Behälter (1) um ihre Behälterachse so gedreht werden, dass die ersten Kieberaufträge (4.1) in Transportrichtung (A) oder entgegen der Transportrichtung (A) und die zweiten Kleberaufträge (4.2) senkrecht zur Transportrichtung (A) orientiert sind.

3. Verfahren nach Anspruch 1, **dadurch gekennzeichnet, dass** aus den über den Transporteur (6) zugeführten Behälterströmen (6.1, 6.2) zunächst jeweils ein dicht gepackter oder verdichteter einspuriger Behälterstrom gebildet wird, und zwar am Übergang zu einem dem ersten Abschnitt (7.1.2, 7.2.2) in Transportrichtung (A) vorausgehenden dritten Abschnitt (7.1.1, 7.2.1) mit zwei beidseitig der Bewegungsbahn der Behälter (1) angeordneten dritten Riemenanordnungen (9.1, 10.1), die endlos umlaufend angetriebene und jeweils eine Schlaufe bildende sowie mit einer Schlaufenlänge gegen die Behälter (1) anliegende Riemen (11) aufweisen, deren Transportgeschwindigkeit kleiner ist als die Transportgeschwindigkeit des Transportelementes (6).

4. Verfahren nach einem der vorhergehenden Ansprüche, **dadurch gekennzeichnet,**
**dass** beim Zusammenführen oder nach dem Zusammenführen der Behälterteilgruppen (3.2) die Behälter (1) auf einem vierten Abschnitt (7.3) in einer Achsrichtung senkrecht zur Transportrichtung (A) gegeneinander angedrückt werden, und zwar durch zwei beidseitig der Bewegungsbahn der Behälter (1) angeordneten vierte Riemenanordnungen (9.4, 10.4), die endlos umlaufend angetriebene und jeweils eine Schlaufe bildende sowie mit einer Schlaufenlänge gegen die Behälter (1) anliegende Riemen (11) aufweisen.

5. Verfahren nach einem der vorhergehenden Ansprüche, **dadurch gekennzeichnet,**
**dass** die Riemenanordnungen (9.1 - 9.4; 10.1 - 10.4) jeweils wenigstens zwei Riemen (11) aufweisen, die eine endlos angetriebene horizontale Schlaufe bilden, und dass die Schlaufen jeder Riemenanordnung in vertikaler Richtung voneinander beabstandet sind.

6. Verfahren nach einem der vorhergehenden Ansprüche, **dadurch gekennzeichnet,**
**dass** sich die an den Seiten der Behandlungsstrecken (7.1, 7.2) vorgesehenen Riemenanordnungen (9.1 - 9.3: 10.1 - 10.3) an ihren Übergängen mit ihren Schlaufen überlappen und hierbei die jeweils von einem Riemen (11) gebildete Schlaufe einer Riemenanordnung gegenüber der von einem Riemen (11) gebildeten Schlaufe einer anschließenden Riemenanordnung in vertikaler Richtung versetzt ist.

7. Verfahren nach einem der vorhergehenden Ansprüche, **dadurch gekennzeichnet,**
**dass** das Aufbringen der Kleberaufträge auf die Behälter (1) derart erfolgt, dass der zweite Kleberauftrag (4.2) gegenüber dem ersten Kleberauftrag (4.1) um die Behälterachse um 90° versetzt ist.

8. Verfahren nach einem der vorhergehenden Ansprüche, **dadurch gekennzeichnet,**
**dass** jeder Behälter (1) zum Aufbringen des ersten und/oder zweiten Kleberauftrags (4.1, 4.2) an einen Behälterträger (16, 17) übergeben wird und der erste und/oder zweite Kleberauftrag (4.1, 4.2) nach gesteuertem Drehen des Behälters (1) um seine Behälterachse mit dem Behälterträger (16, 17) aufgebracht wird, vorzugsweise in Abhängigkeit von der Lage einer auf dem Behälter vorhandenen Ausstattung (2).

9. Verfahren nach Anspruch 8, **dadurch gekennzeichnet, dass** das Drehen der Behälter in die die Bildung der Behälterteilgruppen (3.2) ermöglichende Position durch gesteuertes Drehen der Behälter mit der Behälteraufnahme (16, 17) erfolgt.

10. Vorrichtung zum Herstellen von Gebinden (3), die jeweils in wenigstens zwei Behälterteilgruppen (3.2) jeweils wenigstens zwei Behälter (1) aufweisen, mit einem Behältereinlauf (5.1), in den die Behälter (1) über einen Transporteur (6) in wenigstens einem zweispurigen Behälterstrom (6.1, 6.2) zuführbar sind, mit jeweils einer Behandlungsstrecke (7.1, 7.2) für jede Spur des Behälterstroms (6.1, 6.2) für die Bildung von Behälterteilgruppen (3.2), mit Kleberauflragsköpfen (4) zum Aufbringen von Kleberaufträgen (4.1, 4.2) eines Klebers auf die Behälter (1) auf den jeweiligen Behandlungsstrecken (7.1, 7.2), mit einem auf die Behandlungsstrecken (7.1, 7.2) in Transportrichtung (A) folgenden Transportstreckenabschnitt (7.1.3, 7.2.3, 7.1.4, 7.2.4) zum Zusammenführen der Behälterteilgruppen (3.2) sowie mit einem in Transportrichtung (A) an die Transportstreckenabschnitte (7.1.4, 7.2.4) anschließenden gemeinsamen Transportabschnitt (7.3) zur Bildung der Gebinde (3), **dadurch gekennzeichnet, dass** auf wenigstens einem ersten Abschnitt (7.1.2, 7.2.2) jeder Behandlungsstrecke (7.1, 7.2) für jede Spur des Behälterstroms (6.1, 6.2) beidseitig der Bewegungsbahn der Behälter (1) angeordnete erste Riemenanordnungen (9.2. 10.2) zur Erzeugung von Lücken zwischen den in Transportrichtung (A) aufeinander folgenden Behältern (1) vorgesehen sind, dass auf einem in Transportrichtung (A) anschließenden zweiten Abschnitt (7.1.3, 7.2.3) jeder Behandlungsstrecke (7.1, 7.2) beidseitig der Bewegungsbahn der Behälter (1) angeordnete zweite Riemenanordnungen (9.3, 10.3) zum Verdichten der Behälter (1) in Transportrichtung (A) vorgesehen sind, wobei die Riemenanordnungen (9.1 - 9.4, 10.1 - 10.4) jeweils wenigstens einen eine geschlossene horizontale Schlaufe bildenden endlos umlaufend angetriebenen und mit einer inneren Schlaufenlänge gegen die Behälter anliegenden Riemen (11) bilden.

11. Vorrichtung nach Anspruch 10, **dadurch gekennzeichnet, dass** jede Riemenanordnung (9.1 - 9.4; 10.1 - 10.4) wenigstens zwei Riemen (11) aufweist, die jeweils eine geschlossene Schlaufe bilden, und dass zumindest die gegen die Behälter (1) anliegenden Schlaufenlängen parallel oder im Wesentlichen parallel und voneinander beabstandet sind.

12. Vorrichtung nach Anspruch 10 oder 11, **dadurch gekennzeichnet, dass** im Bereich des ersten Abschnittes (7.1.2, 7.2.2) der Behandlungsstrecken (7.1, 7.2) die Kleberauftragsköpfe (4) zum Aufbringen der Kleberaufträge (4.1, 4.2) angeordnet sind, und dass die Riemen (11) der mit den Behältern (1) zusammenwirkenden zweiten Riemenanordnung (9.3, 10.3) synchron aber gegenläufig derart angetrieben sind, dass sich die die gegen die Behälter (1) anliegenden Schlaufenlängen in Transportrichtung (A) bewegen, aber mit einer gegenüber der Transportgeschwindigkeit des vorausgehenden ersten Abschnitts (7.1.2, 7.2.2) reduzierten Geschwindigkeit, so dass sich am Übergang zum zweiten Abschnitt (7.1.3, 7.2.3) eine Verdichtung des Behälterstroms ergibt.

13. Vorrichtung nach einem der vorhergehenden Ansprüche 10 bis 12, **dadurch gekennzeichnet, dass** die Behandlungsstrecken (7.1. 7.2) bezogen auf die Transportrichtung (A) dem ersten Abschnitt (7.1.2, 7.2.2) vorausgehend einen dritten Abschnitt (7.1.1, 7.2.1) aufweisen, an welchem beidseitig der Bewegungsbahn der Behälter (1) jeweils eine Riemenanordnung (9.1, 10.1) vorgesehen ist, deren Riemen so angetrieben sind, dass die Transportgeschwindigkeit des dritten Abschnitts (7.1.1, 7.2.1) kleiner ist als die Transportgeschwindigkeit eines in Transportrichtung vorausgehenden Transportabschnittes zum Zuführen der Behälter (1), so dass am Übergang zum dritten Abschnitt (7.1.1, 7.2.1) eine Verdichtung des jeweiligen einspurigen Behälterstromes erfolgt.

14. Vorrichtung nach einem der vorhergehenden Ansprüche 10 bis 13, **dadurch gekennzeichnet, dass** jede Riemenanordnung (9.1 - 9.4; 10.1 - 10.4) wenigstens zwei eine geschlossene Schlaufe bildende Riemen (11) aufweist, und dass die Schlaufen parallel sowie voneinander beabstandet vorgesehen sind.

15. Vorrichtung nach einem der vorhergehenden Ansprüche 10 bis 14, **dadurch gekennzeichnet, dass** der Übergang zwischen Riemenanordnungen (9.1 - 9.3; 10.1 - 10.3), die an einer gemeinsamen Seite der Bewegungsbahn der Behälter (1) vorgesehen sind, derart ausgebildet ist, dass sich dort die Riemen (11) oder deren Schlaufen der aneinander anschließenden Riemenanordnungen (9.1 - 9.3; 10.1 -10.3) überlappen.

16. Vorrichtung nach einem der vorhergehenden Ansprüche 10 bis 15, **dadurch gekennzeichnet, dass** die Riemen der Riemenanordnungen (9.2, 10.2) am ersten Abschnitt (7.1.2, 7.2.2) derart angetrieben sind, dass die Behälter (1) für das Aufbringen der Kleberaufträge (4.1, 4.2) und/oder für das Ausrichten der Kleberaufträge gesteuert um ihre Behälterachse gedreht werden.

17. Vorrichtung nach einem der vorhergehenden Ansprüche 10 bis 16, **dadurch gekennzeichnet, dass** die Behandlungsstrecken (7.1, 7.2) jeweils lineare oder geradlinige Behandlungsstrecken sind.

18. Vorrichtung nach einem der vorhergehenden Ansprüche 10 bis 17, **dadurch gekennzeichnet, dass** der erste Abschnitt (7.1.2, 7.2.2) der Behandlungsstrecke (7.1, 7.2) zumindest teilweise von einer Kleberauftragsstation (15) gebildet ist, die auf einer geschlossenen Bewegungsbahn (16.1, 17.1) umlaufende Behälterträger (16, 17) aufweist, an die die Behälter (1) jeweils einzeln übergeben werden, und dass Antriebs- und Steuermittel (18, 19, 20, 21, 23, 24) vorgesehen sind, mit denen die Behälterträger (16) und die auf diesen angeordneten Behälter (1) durch Drehen um die Behälterachse für das Aufbringen der Kleberaufträge (4.1, 4.2) ausgerichtet und/oder in eine für die Herstellung der Behälterteilgruppen (3.2) notwendige Position gebracht werden.

19. Vorrichtung nach Anspruch 18, **dadurch gekennzeichnet, dass** die Antriebs- und Steuermittel von wenigstens einem an der Bewegungsbahn der Behälteraufnahmen (16, 17) angeordneten Antriebselement (18, 19, 20, 21, 23, 24) gebildet sind, welches eine antriebsmäßige Verbindung mit dem jeweils vorbeibewegten Behälterträger (16, 17) herstellt.

## Claims

1. A method for producing packages (3), which have at least two containers (1) in at least two container sub-groups (3.2), wherein the containers (1) are fed by means of a conveyor (6) to a container inlet (5.1) of a device (5) with treatment segments (7.1, 7.2) in at least one two-track container flow (6.1, 6.2), wherein the containers (1) on the treatment segments (7.1, 7.2) of the device are provided with adhesive applications (4.1, 4.2) of an adhesive, wherein, in each treatment segment (7.1, 7.2), the container sub-groups (3.2) are first formed from the containers (1) thus treated by means of first adhesive applications (4.1) between the containers (1), and wherein, by bringing the container sub-groups (3.2) together, the container sub-groups are connected to each other by means of second adhesive applications (4.2),
**characterised in that**
on at least one first section (7.1.2, 7.2.2) of each treatment segment (7.1, 7.2), first belt arrangements (9.2, 10.2) arranged over both sides of the movement path of the containers (1) comprise belts (11), driven endlessly circulating and in each case forming a loop, as well as being in contact with a length of the loop against the containers (1), forming gaps between the containers (1) following one another in the transport direction (A), with a first adhesive application (4.1) then being applied onto each container, as well as the second adhesive application (4.1) onto the containers (1) on at least one treatment segment, and that, on a second section (7.1.3, 7.2.3) following in the transport direction (A), the compaction of the containers (1) in the transport direction (A) takes place by means of second belt arrangements (9.3, 10.3), which are arranged on both sides of the movement path of the containers (1), and comprise endlessly circulating driven belts (11), in each case forming a loop as well as being in contact with a length of the loop against the containers (1), which are driven at a reduced speed in comparison with the transport speed of the first section (7.1.2, 7.2.2).

2. Method according to claim 1, **characterised in that** the containers (1) are rotated about their container axis in such a way that the first adhesive applications (4.1) are oriented in the transport direction (A) or against the transport direction (A), and the second adhesive applications (4.2) are oriented perpendicular to the transport direction (A).

3. Method according to claim 1, **characterised in that**, from the container flows (6.1, 6.2) fed via the conveyor (6), in each case a densely packed or compacted container flow is first formed, and specifically at the transition to a third section (7.1.1, 7.2.1) preceding the first section (7.1.2, 7.2.2.) in the transport direction (A), while two third belt arrangements (9.1, 10.1), arranged on both sides of the movement path of the containers (1), comprise belts (11) which are driven endlessly circulating and in each case form a loop, as well as being in contact with a length of the loop against the containers (1), of which the transport speed is lower than the transport speed of the transport element (6).

4. Method according to any one of the preceding claims, **characterised in that**, when or after the container sub-groups (3.2) are brought together, the containers (1) are pressed against one another on a fourth section (7.3) in an axial direction perpendicular to the transport direction (A), and specifically by means of two fourth belt arrangements (9.4, 10.4) arranged on both sides of the movement path of the containers (1), which comprise belts (11) which are driven endlessly circulating and in each case form a loop, as well as being in contact with a length of the loop against the containers (1).

5. Method according to any one of the preceding claims, **characterised in that** the belt arrangements (9.1-9.4; 10.1-10.4) comprise in each case two belts (11), which form an endless driven horizontal loop, and that the loops of each belt arrangement are spaced at a distance from one another in the vertical direction.

6. Method according to any one of the preceding claims, **characterised in that** belt arrangements (9.1-9.3; 10.1-10.3) provided at the sides of the treatment segments (7.1, 7.2) overlap at their transitions with their loops, and in this situation the loop of a belt arrangement, formed in each case by a belt (11), is offset in the vertical direction in relation to the loop formed by a belt (11) of a following belt arrangement.

7. Method according to any one of the preceding claims, **characterised in that** the application of the adhesive applications onto the containers (1) takes place in such a way that the second adhesive application (4.2) is offset in relation to the first adhesive application (4.1) by 90° about the container axis.

8. Method according to any one of the preceding claims, **characterised in that**, for the application of the first and/or second adhesive application (4.1, 4.2), each container (1) is transferred to a container carrier (16, 17), and the first and/or second adhesive application (4.1, 4.2) is applied after the controlled rotation of the container (1) about its container axis with the container carrier (16, 17), preferably as a function of the location of the fitting (2) provided on the container.

9. Method according to claim 8, **characterised in that** the rotation of the containers into the position which allows for the formation of the container groups (3.2) takes place by the controlled rotation of the containers with the container receiver (16, 17).

10. Device for producing packages (3), which have at least two containers (1) in at least two container sub-groups (3.2), with a container inlet (5.1), into which the containers (1) can be fed by a conveyor (6) in at least one two-track container flow (6.1, 6.2), with in each case a treatment segment (7.1, 7.2) for each track of the container flow (6.1, 6.2) for the formation of container sub-groups (3.2) with adhesive application heads (4) for applying adhesive applications (4.1, 4.2) of an adhesive onto the containers (1) on the respective treatment segments (7.1, 7.2), with a transport segment section (7.1.3, 7.2.3, 7.1.4, 7.2.4) following the treatment segments (7.1, 7.2) in the transport direction (A) for bringing together the container sub-groups (3.2), as well as a common transport section (7.3) following the transport segment sections (7.1.4, 7.2.4) in the transport direction (A), in order to form the packages (3), **characterised in that**, on at least one first section (7.1.2, 7.2.2) of each treatment segment (7.1, 7.2), for each track of the container flow (6.1, 6.2), first belt arrangements (9.2, 10.2) are arranged on both sides of the movement paths of the containers (1) in order to create gaps between the containers (1) following one another in the transport direction (A), that on a second section (7.1.3, 7.2.3) of each treatment segment (7.1, 7.2), following in the transport direction (A), second belt arrangements (9.3, 10.3) are provided, arranged on both sides of the movement path of the containers (1), for compacting the containers (1) in the transport direction (A), wherein the belt arrangements (9.1-9.4, 10.1-10.4) in each case form at least one belt (11), which forms a closed horizontal loop, driven such as to be endlessly circulating, and in contact with an inner loop length against the containers.

11. Device according to claim 11, **characterised in that** each belt arrangement (9.1-9.4; 10.1-10.4) comprises at least two belts (11), which in each case form an endless loop, and that at least the loop lengths in contact against the containers (1) are arranged parallel or essentially parallel and spaced at a distance from one another.

12. Device according to claim 10 or 11, **characterised in that**, in the region of the first section (7.1.2, 7.2.2) of the treatment segments (7.1, 7.2), the adhesive application heads (4) for applying the adhesive applications (4.1, 4.2) are arranged, and that the belts (11) of the second belt arrangement (9.3, 10.3) interacting with the containers (1) are driven synchronously but in a counter direction, in such a way that the loop lengths in contact against the containers (1) move in the transport direction (A), but at a speed which is reduced in comparison with the transport speed of the preceding first section (7.1.2, 7.2.2), such that a compaction of the container flow takes place at the transition to the second section (7.1.3, 7.2.3).

13. Device according to any one of the preceding claims 10 to 12,
**characterised in that** the treatment segments (7.1, 7.2) comprise a third section (7.1.1, 7.2.1), preceding the first section (7.1.2, 7.2.2) in relation to the transport direction (A), at which a belt arrangement (9.1, 10.1) is provided in each case, on both sides of the movement path of the containers (1), the belts of which are driven in such a way that the transport speed of the third section (7.1.1, 7.2.1) is lower than the transport speed of a transport section preceding in the transport direction for feeding the containers (1), such that a compaction of the respective single-track container flow takes place at the transition to the third section (7.1.1, 7.2.1).

14. Device according to any one of the preceding claims 10 to 13,
**characterised in that** each belt arrangement (9.1-9.4; 10.1-10.4) comprises at least two belts (11) forming a closed loop, and that the loops are provided parallel and spaced at a distance from one another.

15. Device according to any one of the preceding claims 10 to 14, **characterised in that** the transition between belt arrangements (9.1-9.3; 10.1-10.3) which are provided on a common side of the movement path of the containers (1) is arranged in such a way that at that point the belts (11), or the loops of the belt arrangements (9.1-9.3; 10.1-10.3) connecting to one another, overlap.

16. Device according to any one of the preceding claims 10 to 15,
**characterised in that** the belts of the belt arrangements (9.2, 10.2) on the first section (7.1.2, 7.2.2) are driven in such a way that the containers (1) are rotated in a controlled manner about their container axis for the application of the adhesive applications (4.1, 4.2) and/or for the alignment of the adhesive applications.

17. Device according to any one of the preceding claims 10 to 16,
**characterised in that** the treatment segments (7.1, 7.2) are in each case linear or straight line treatment segments.

18. Device according to any one of the preceding claims 10 to 17,
**characterised in that** the first section (7.1.2, 7.2.2) of the treatment segment (7.1, 7.2) is formed at least partially by an adhesive application station (15), which comprises container carriers (16, 17) circulating on a closed movement path (16.1, 17.1), to which the containers (1) are transferred in each case individually, and that drive and control means (18, 19, 20, 21, 23, 24) are provided, with which the container carriers (16) and the containers (1) arranged on them are aligned by rotation about the container axis for the application of the adhesive applications (4.1, 4.2) and/or are brought into a position necessary for producing the container sub-groups (3.2).

19. Device according to claim 18, **characterised in that** the drive and control means are formed by at least one drive element (18, 19, 20, 21, 23, 24) arranged at the movement path of the container receivers (16, 17), which produces a connection with the effect of a drive with the container carrier (16, 17) moving past in each case.

## Revendications

1. Procédé de fabrication d'emballages (3) qui présentent, dans au moins deux groupes partiels de récipient (3.2), respectivement au moins deux récipients (1), dans lequel les récipients (1) sont amenés par un transporteur (6) à une entrée de récipient (5.1) d'un dispositif (5) avec des voies de traitement (7.1, 7.2) dans au moins un courant de récipient (6.1, 6.2) à deux voies, dans lequel les récipients (1) sont pourvus, sur les voies de traitement (7.1, 7.2) du dispositif, d'applications de colle (4.1, 4.2) d'une colle, dans lequel sur chaque voie de traitement (7.1, 7.2) composée des récipients (1) ainsi traités, tout d'abord les groupes partiels de récipient (3.2) sont formés avec des premières applications de colle (4.1) entre les récipients (1), et dans lequel par réunion des groupes partiels de récipient (3.2), ceux-ci sont reliés entre eux par des deuxièmes applications de colle (4.2),
**caractérisé en ce que**
sur au moins une première section (7.1.2, 7.2.2) de chaque voie de traitement (7.1, 7.2) par le biais de premiers agencements de courroie (9.2, 10.2) agencés de part et d'autre de la voie de déplacement des récipients (1) qui présentent des courroies (11) entraînées en rotation sans fin et formant respectivement une boucle ainsi que reposant avec une longueur de boucle contre les récipients (1), des vides sont générés entre les récipients (1) se succédant dans le sens de transport (A), puis la première application de colle (4.1) sur chaque récipient ainsi que sur au moins une voie de traitement, la seconde application de colle (4.1) est aussi réalisée sur les récipients (1), et **en ce que** sur une deuxième section (7.1.3, 7.2.3) contiguë dans le sens de transport (A), la compression des récipients (1) est effectuée dans le sens de transport (A) par des seconds agencements de courroie (9.3, 10.3), qui sont agencés de part et d'autre de la voie de déplacement des récipients (1) et qui présentent des courroies (11) entraînées en rotation sans fin et formant respectivement une boucle ainsi que reposant avec une longueur de boucle contre les récipients (1), qui sont entraînées à une vitesse réduite par rapport à la vitesse de transport de la première section (7.1.2, 7.2.2).

2. Procédé selon la revendication 1, **caractérisé en ce que** les récipients (1) sont tournés autour de leur axe de récipient de sorte que les premières applications de colle (4.1) soient orientées dans le sens de transport (A) ou dans le sens inverse au sens de transport (A) et les secondes applications de colle (4.2) sont orientées perpendiculairement au sens de transport (A).

3. Procédé selon la revendication 1, **caractérisé en ce qu'**à partir des courants de récipient (6.1, 6.2) amenés par le transporteur (6), tout d'abord respectivement un courant de récipient à une voie compressé ou emballé de manière dense est formé, et ce sur la transition à une troisième section (7.1.1, 7.2.1) précédant la première section (7.1.2, 7.2.2) dans le sens de transport (A) avec deux troisièmes agencements de courroie (9.1, 10.1) agencés de part et d'autre de la voie de déplacement des récipients (1), qui présentent des courroies (11) entraînées en rotation sans fin et formant respectivement une boucle ainsi que reposant avec une longueur de boucle contre les récipients (1), dont la vitesse de transport est inférieure à la vitesse de transport de l'élément de transport (6).

4. Procédé selon l'une quelconque des revendications précédentes,
**caractérisé en ce que** lors de la réunion ou après la réunion des groupes partiels de récipient (3.2), les récipients (1) sont pressés sur une quatrième section (7.3) dans un sens d'axe perpendiculairement au sens de transport (A) les uns contre les autres, et ce par deux quatrièmes agencements de courroie (9.4, 10.4) agencés de part et d'autre de la bande de déplacement des récipients (1), qui présentent des courroies (11) entraînées en rotation sans fin et formant respectivement une boucle ainsi que reposant avec une longueur de boucle contre les récipients (1).

5. Procédé selon l'une quelconque des revendications précédentes,
**caractérisé en ce que** les agencements de courroie (9.1-9.4; 10.1-10.4) présentent respectivement au moins deux courroies (11) qui forment une boucle horizontale entraînée sans fin et **en ce que** les boucles de chaque agencement de courroie sont espacées les unes des autres dans le sens vertical.

6. Procédé selon l'une quelconque des revendications précédentes,
**caractérisé en ce que** les agencements de courroie (9.1-9.3 ; 10.1-10.3) prévus sur les côtés des voies de traitement (7.1, 7.2) se recouvrent sur leurs transitions aux boucles et à cette occasion la boucle formée respectivement par une courroie (11) d'un agencement de courroie est décalée dans le sens vertical par rapport à la boucle formée par une courroie (11) d'un agencement de courroie contigu.

7. Procédé selon l'une quelconque des revendications précédentes,
**caractérisé en ce que** l'application des applications de colle sur les récipients (1) est effectuée de telle manière que la seconde application de colle (4.2) soit décalée de 90° par rapport à la première application de colle (4.1) autour de l'axe de récipient.

8. Procédé selon l'une quelconque des revendications précédentes,
**caractérisé en ce que** chaque récipient (1) est transmis pour la réalisation de la première et/ou seconde applications de colle (4.1, 4.2) à un support de récipient (16, 17) et la première et/ou seconde application de colle (4.1, 4.2) est réalisée après la rotation commandée du récipient (1) autour de son axe de récipient avec le support de récipient (16, 17), de préférence en fonction de la position d'un équipement présent (2) sur le récipient.

9. Procédé selon la revendication 8, **caractérisé en ce que** la rotation des récipients est effectuée dans la position permettant la formation des groupes partiels de récipient (3.2) par rotation commandée des récipients avec le logement de récipient (16, 17).

10. Dispositif de fabrication d'emballages (3) qui présentent respectivement dans au moins deux groupes partiels de récipient (3.2) respectivement au moins deux récipients (1), avec une entrée de récipient (5.1), dans laquelle les récipients (1) peuvent être amenés par un transporteur (6) dans au moins un courant de récipient à deux voies (6.1, 6.2), avec respectivement une voie de traitement (7.1, 7.2) pour chaque voie du courant de récipient (6.1, 6.2) pour la formation de groupes partiels de récipient (3.2), avec des têtes d'application de colle (4) pour la réalisation d'applications de colle (4.1, 4.2) d'une colle sur les récipients (1) sur les voies de traitement (7.1, 7.2) respectives, avec une section de voie de transport (7.1.3, 7.2.3, 7.1.4, 7.2.4) suivant les voies de traitement (7.1, 7.2) dans le sens de transport (A) pour la réunion des groupes partiels de récipient (3.2) ainsi qu'avec une section de transport (7.3) commune contiguë aux sections de voie de transport (7.1.4, 7.2.4) dans le sens de transport (A) pour la formation des emballages (3), **caractérisé en ce que** sur au moins une première section (7.1.2, 7.2.2) de chaque voie de traitement (7.1, 7.2) pour chaque voie du courant de récipient (6.1, 6.2), des premiers agencements de courroie (9.2, 10.2) agencés de part et d'autre de la bande de déplacement des récipients (1) sont prévus pour la génération de vides entre les récipients (1) se suivant dans le sens de transport (A), **en ce que** sur une deuxième section (7.1.3, 7.2.3) contiguë dans le sens de transport (A) de chaque voie de traitement (7.1, 7.2), des seconds agencements de courroie (9.3, 10.3) agencés de part et d'autre de la voie de déplacement des récipients (1) sont prévus pour la compression des récipients (1) dans le sens de transport (A), dans lequel les agencements de courroie (9.1-9.4, 10.1-10.4) forment respectivement au moins une courroie (11) formant une boucle horizontale fermée, entraînée en rotation sans fin et reposant avec une longueur de boucle intérieure contre les récipients.

11. Dispositif selon la revendication 10, **caractérisé en ce que** chaque agencement de courroie (9.1-9.4; 10.1-10.4) présente au moins deux courroies (11) qui forment respectivement une boucle fermée et **en ce qu'**au moins les longueurs de boucle reposant contre les récipients (1) sont espacées parallèlement ou sensiblement parallèlement et les unes des autres.

12. Dispositif selon la revendication 10 ou 11, **caractérisé en ce que** dans la zone de la première section (7.1.2, 7.2.2) des voies de traitement (7.1, 7.2), les têtes d'application de colle (4) sont agencées pour l'application des applications de colle (4.1, 4.2), et **en ce que** les courroies (11) du second agencement de courroie (9.3, 10.3) agissant ensemble avec les récipients (1) sont entraînées de manière synchrone mais en sens inverse de telle manière que les longueurs de boucle reposant contre les récipients (1) se déplacent dans le sens de transport (A) mais à une vitesse réduite par rapport à la vitesse de transport de la première section précédente (7.1.2, 7.2.2) de sorte qu'il résulte une compression du courant de récipient sur la transition à la deuxième section (7.1.3, 7.2.3).

13. Dispositif selon l'une des revendications précédentes 10 à 12,
**caractérisé en ce que** les voies de traitement (7.1, 7.2) présentent, précédant la première section (7.1.2, 7.2.2) par rapport au sens de transport (A), une troisième section (7.1.1, 7.2.1), sur laquelle respectivement un agencement de courroie (9.1, 10.1) est prévu de part et d'autre de la bande de déplacement des récipients (1), dont les courroies sont entraînées de sorte que la vitesse de transport de la troisième section (7.1.1, 7.2.1) soit inférieure à la vitesse de transport d'une section de transport précédente dans le sens de transport pour l'alimentation des récipients (1) de sorte qu'une compression du courant de récipient à une voie respectif soit effectuée sur la transition à la troisième section (7.1.1, 7.2.1).

14. Dispositif selon l'une des revendications précédentes 10 à 13,
**caractérisé en ce que** chaque agencement de courroie (9.1-9.4 ; 10.1-10.4) présente au moins deux courroies (11) formant une boucle fermée et **en ce que** les boucles sont prévues parallèlement ainsi qu'espacées les unes des autres.

15. Dispositif selon l'une des revendications précédentes 10 à 14,
**caractérisé en ce que** la transition entre des agencements de courroie (9.1-9.3 ; 10.1-10.3) qui sont prévus sur un côté commun de la voie de déplacement des récipients (1) est réalisée de telle manière que les courroies (11) ou leurs boucles des agencements de courroie (9.1-9.3 ; 10.1-10.3) contigus les uns aux autres s'y recouvrent.

16. Dispositif selon l'une des revendications précédentes 10 à 15,
**caractérisé en ce que** les courroies des agencements de courroie (9.2, 10.2) sont entraînées sur la première section (7.1.2, 7.2.2) de telle manière que les récipients (1) pour l'application des applications de colle (4.1, 4.2) et/ou pour l'orientation des applications de colle soient tournés de manière commandée autour de leur axe de récipient.

17. Dispositif selon l'une des revendications précédentes 10 à 16,
**caractérisé en ce que** les voies de traitement (7.1, 7.2) sont des voies de traitement respectivement linéaires ou rectilignes.

18. Dispositif selon l'une des revendications précédentes 10 à 17,
**caractérisé en ce que** la première section (7.1.2, 7.2.2) de la voie de traitement (7.1, 7.2) est formée au moins partiellement par un poste d'application de colle (15) qui présente des supports de récipient (16, 17) tournant sur une voie de déplacement (16.1, 17.1) fermée, à laquelle les récipients (1) sont remis respectivement individuellement, et **en ce que** des moyens d'entraînement et de commande (18, 19, 20, 21, 23, 24) sont prévus, avec lesquels les supports de récipient (16) et les récipients (1) agencés sur ceux-ci sont orientés par rotation autour de l'axe de récipient pour l'application des applications de colle (4.1, 4.2) et/ou sont amenés dans une position nécessaire à la fabrication des groupes partiels de récipient (3.2).

19. Dispositif selon la revendication 18, **caractérisé en ce que** les moyens d'entraînement et de commande sont formés par au moins un élément d'entraînement (18, 19, 20, 21, 23, 24) agencé sur la voie de déplacement des logements de récipient (16, 17), lequel établit une liaison d'entraînement avec le support de récipient (16, 17) qui se déplace devant respectivement.
